(19) Europäisches Patentamt
European Patent Office
Office européen des brevets

(11) EP 4 560 572 A1

(12) EUROPEAN PATENT APPLICATION
published in accordance with Art. 153(4) EPC

(43) Date of publication:
28.05.2025 Bulletin 2025/22

(51) International Patent Classification (IPC):
G06T 7/20 (2017.01)  G06Q 50/04 (2012.01)
G06V 40/20 (2022.01)

(21) Application number: 23842787.6

(22) Date of filing: 27.06.2023

(52) Cooperative Patent Classification (CPC):
G06Q 50/04; G06T 7/20; G06V 40/20

(86) International application number:
PCT/JP2023/023861

(87) International publication number:
WO 2024/018856 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.07.2022 JP 2022116724

(71) Applicant: OMRON Corporation
Kyoto 600-8530 (JP)

(72) Inventor: NISHIYUKI, Kenta
Kyoto-shi, Kyoto 600-8530 (JP)

(74) Representative: SONN Patentanwälte GmbH & Co
KG
Riemergasse 14
1010 Wien (AT)

(54) TASK CYCLE INFERENCE DEVICE, TASK CYCLE INFERENCE METHOD, AND TASK CYCLE INFERENCE PROGRAM

(57) A task cycle estimation device includes: a movement information acquisition section that acquires movement information relating to a movement of a worker when performing a predetermined series of tasks; an estimation section that estimates a start point and an end point of a task cycle of the worker based on the movement information; and an output section that outputs the estimated start point and end point of the task cycle.

[FIG.3]

## Description

Technical Field

The technology of the present disclosure relates to a task cycle estimation device, a task cycle estimation method, and a task cycle estimation program.

Background Art

Japanese Patent Application (JP-A) No. 2022-3491 discloses an analysis device that extracts a first motif and a second motif from time series data indicating the movements of a worker repeating a first step, tracks each of the first motif and the second motif which repeatedly appear in the time series data, and analyzes periods of time other than for the first step in the time series data using respective intervals between the plural tracked first motifs and the plural tracked second motifs.

SUMMARY

Problem to be Solved by the Invention

However, the technique described in the above-mentioned JP-A No. 2022-3491 has a problem in that since the motifs are tracked using a particle filter based on the standard working time that is input in advance, it is necessary to measure the standard working time in advance.
The technology of the present disclosure has been made in view of the above points, and aims to provide a task cycle estimation device, a task cycle estimation method, and a task cycle estimation program which can estimate the start point and the end point of a work cycle without measuring standard working times and the like in advance.

Means for Solving the Problem

A first aspect of the present disclosure is a task cycle estimation device, the task cycle estimation device including: a movement information acquisition section that acquires movement information relating to a movement of a worker when performing a predetermined series of tasks; an estimation section that estimates a start point and an end point of a task cycle of the worker based on the movement information; and an output section that outputs the estimated start point and end point of the task cycle.
A second aspect of the present disclosure is the task cycle estimation device of the first aspect, wherein the estimation section includes: a posture sequence generating section that, based on the movement information, generates a posture sequence relating to a change in posture based on a skeleton of the worker, the posture sequence excluding information that is unique to the worker; a segment sequence generating section that generates, for each specific posture, a segment sequence in which the posture sequence is divided into plural segments so that each segment includes a specific posture once; and a setting section that sets, as the start point and the end point of each task cycle, a beginning and an end of each segment included in a segment sequence having a highest degree of similarity between segments, among plural segment sequences generated for each specific posture.
A third aspect of the present disclosure is the task cycle estimation device of the second aspect, wherein the configuration may be one in which the posture sequence generating section includes: a motion vector sequence calculation section that calculates a motion vector sequence of the worker based on the movement information; and a clustering section that performs clustering on the motion vector sequence to generate a class sequence, the segment sequence generating section includes: a first segment sequence generating section that generates, for each of plural classes, a first segment sequence in which the class sequence, which begins with a class selected from the plural classes, is divided into plural first segments; and a frequent pattern identifying section that identifies a frequent pattern of a class common among the plural first segments, for each of the generated plural first segment sequences; and a second segment sequence generating section that generates a second segment sequence in which the class sequence is divided into plural second segments including the frequent pattern, and the setting section includes: an evaluation value calculation section that calculates an evaluation value relating to a degree of similarity between the plural second segments for each of the generated plural second segment sequences; and an identifying section that identifies, as the start point and the end point of each task cycle, a beginning and an end of each second segment included in a second segment sequence having a highest evaluation value among evaluation values calculated for each of the plural second segment sequences.
A fourth aspect of the present disclosure is the task cycle estimation device of the third aspect, wherein the clustering section removes, from the class sequence, classes that exist only near a beginning or an end of the class sequence and that have a ratio, with respect to a length of the class sequence, which is less than or equal to a predetermined first threshold value.

A fifth aspect of the present disclosure is the task cycle estimation device of the third aspect or the fourth aspect, wherein the second segment sequence generating section sets a second threshold value to half a cycle length of the plural second segments included in the second segment sequence, and joins a second segment having a cycle length that is less than or equal to the second threshold value to an immediately previous second segment.

A sixth aspect of the present disclosure is the task cycle estimation device of any of the third aspect to the fifth aspect, wherein the evaluation value calculation section excludes, from calculation of the evaluation value, second segments for which degrees of similarity between the plural second segments are all less than or equal to a predetermined third threshold value.

A seventh aspect of the present disclosure is the task cycle estimation device of any of the third aspect to the sixth aspect, wherein the configuration may be one in which the first segment sequence generating section generates an end-excluding segment sequence from which an end first segment is excluded, and a front-excluding segment sequence from which a front first segment is excluded; and the frequent pattern identifying section identifies a frequent pattern that combines a frequent pattern of the end-excluding segment sequence and a frequent pattern of the front-excluding segment sequence as a frequent pattern of a class common among the plural first segments.

An eighth aspect of the present disclosure is the task cycle estimation device of any of the third aspect to the seventh aspect, wherein the configuration may be one in which the second segment sequence generating section generates a second segment sequence in which the class sequence is divided into a second segment in which a pattern other than a second segment candidate including the frequent pattern is added to a beginning of the second segment candidate that is adjacent to a rear of the pattern, and a second segment sequence in which the class sequence is divided into a second segment in which a pattern other than the second segment candidate is added to an end of the second segment candidate that is adjacent to a front of the pattern.

A ninth aspect of the present disclosure is the task cycle estimation device of any of the second aspect to the eighth aspect, wherein the posture sequence is a sequence of postures based on the skeleton of an upper body and a lower body of the worker.

A tenth aspect of the present disclosure is the task cycle estimation device of any of the second aspect to the ninth aspect, wherein the posture sequence generating section generates a posture sequence excluding an effect of camera viewpoint.

An eleventh aspect of the present disclosure is the task cycle estimation device of any of the second aspect to the tenth aspect, wherein the posture sequence generating section generates a skeleton sequence of the worker based on the movement information, and generates the posture sequence after performing at least one of interpolating processing or smoothing processing with respect to the generated skeleton sequence.

A twelfth aspect of the present disclosure is a task cycle estimation method in which a computer executes processing, the processing including: acquiring movement information relating to a movement of a worker when performing a predetermined series of tasks; estimating a start point and an end point of a task cycle of the worker based on the movement information; and outputting the estimated start point and end point of the task cycle.

A thirteenth aspect of the present disclosure is a task cycle estimation program that causes a computer to execute processing, the processing including: acquiring movement information relating to a movement of a worker when performing a predetermined series of tasks; estimating a start point and an end point of a task cycle of the worker based on the movement information; and outputting the estimated start point and end point of the task cycle.

Effect of the Invention

According to the technology of the present disclosure, it is possible to estimate the start point and the end point of a task cycle without measuring standard working times or the like in advance.

Brief Description of the Drawings

Fig. 1 is a configuration diagram of a task cycle estimation system.
Fig. 2 is a configuration diagram illustrating a hardware configuration of a task cycle estimation device.
Fig. 3 is a functional block diagram of a task cycle estimation device.
Fig. 4 is a diagram illustrating an example of a class sequence.
Fig. 5 is a diagram for explaining a first segment sequence.
Fig. 6 is a diagram for explaining a second segment sequence.
Fig. 7 is a diagram for explaining the second segment sequence.
Fig. 8 is a diagram for explaining a start point and an end point of a task cycle.

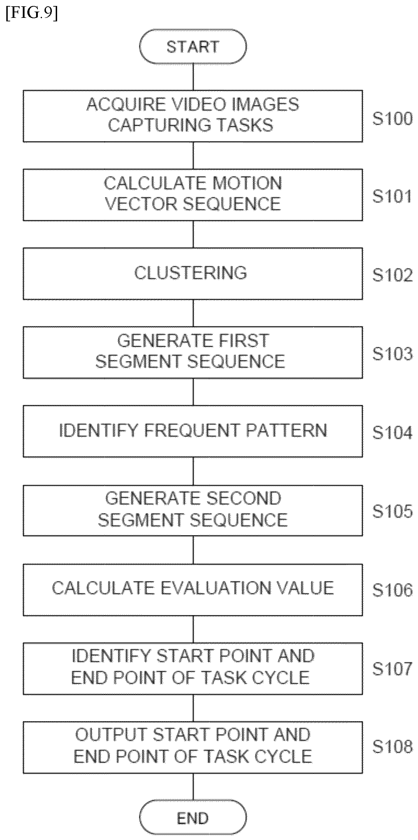

Fig. 9 is a flowchart of task cycle estimation processing.

Mode for Implementing the Invention

An example of an exemplary embodiment of the present disclosure is described hereinafter with reference to the drawings. Note that the same reference numerals are appended to the same or equivalent configuration elements and parts in each drawing. Further, the dimensional ratios in the drawings may be exaggerated for convenience of explanation and may differ from the actual ratios.

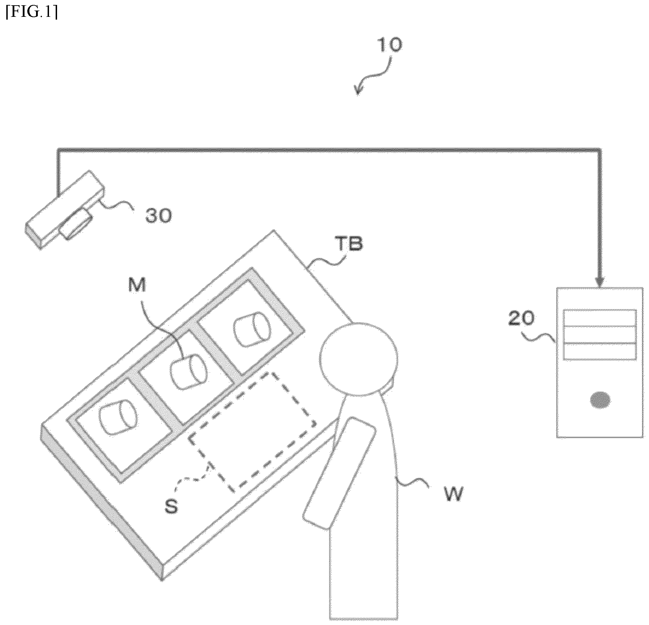

Fig. 1 illustrates the configuration of a task cycle estimation system 10. The task cycle estimation system 10 includes a task cycle estimation device 20 and a camera 30.

The task cycle estimation device 20 estimates a start point and an end point of a task cycle of tasks performed by a worker W, based on video images captured by the camera 30.

As an example, the worker W takes out a work object M that is placed on a work table TB and performs a predetermined series of tasks at a work space S. The series of tasks performed by the worker W include a variety of actions in one task cycle, such as, with respect to a part, grasping, carrying, assembling, inspecting, tightening a screw with a screwdriver, and attaching a label.

The camera 30 is an imaging device that is capable of capturing, for example, RGB color video images. The camera 30 is installed at a position at which the movements of the worker W, and the work table in its entirety, can be easily recognized.

Further, in the present exemplary embodiment, although a case is described in which there is one camera 30, a configuration in which plural cameras 30 are provided may also be used.

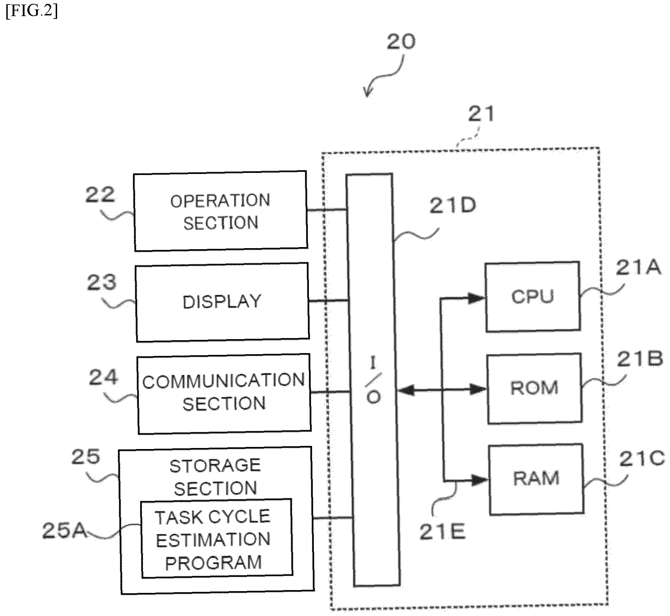

Fig. 2 is a block diagram illustrating a hardware configuration of the task cycle estimation device 20 according to the present exemplary embodiment. As illustrated in Fig. 2, the task cycle estimation device 20 includes a controller 21. The controller 21 is configured by a device including a general computer.

As illustrated in Fig. 2, the controller 21 includes a central processing unit (CPU) 21A, read only memory (ROM) 21B, random access memory (RAM) 21C, and an input/output interface (I/O) 21D. The CPU 21A, the ROM 21B, the RAM 21C, and the I/O 21D are connected to each other via a bus 21E. The bus 21E includes a control bus, an address bus, and a data bus.

Further, an operation section 22, a display 23, a communication section 24, and a storage section 25 are connected to the I/O 21D.

The operation section 22 includes, for example, a mouse and a keyboard.

The display 23 is configured by, for example, a liquid crystal display.

The communication section 24 is an interface for performing data communication with an external device such as the camera 30.

The storage section 25 is configured by a non-volatile external storage device such as a hard disk. As illustrated in Fig. 2, the storage section 25 stores a task cycle estimation program 25A and the like.

The CPU 21A is an example of a computer. Here, a computer refers to a processor in a broad sense, and includes a general-purpose processor (for example, a CPU) or a dedicated processor (for example, a graphics processing unit (GPU), an Application Specific Integrated Circuit (ASIC), a Field Programmable Gate Array (FPGA), a programmable logic device, or the like).

Note that the task cycle estimation program 25A may be realized by being stored in a non-volatile non-transitory recording medium, or distributed via a network, and appropriately installed in the task cycle estimation device 20.

Compact disc read only memory (CD-ROMs), magneto-optical disks, hard disk drives (HDDs), digital versatile disc read only memory (DVD-ROMs), flash memory, memory cards, and the like are assumed as examples of non-volatile non-transitory recording media.

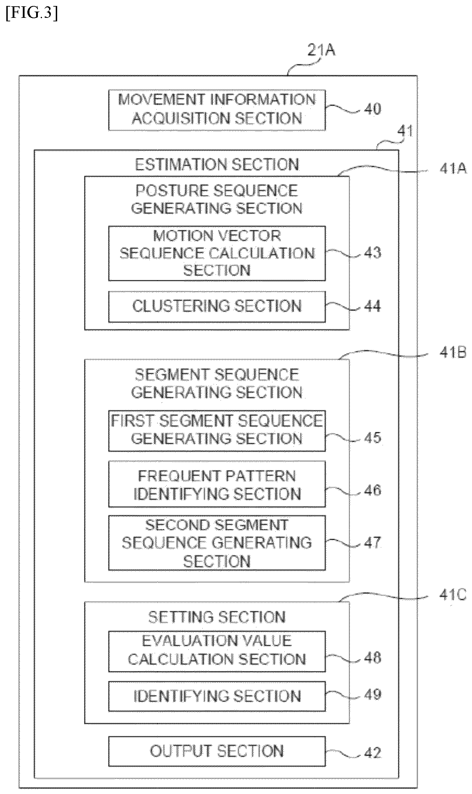

Fig. 3 is a block diagram illustrating a functional configuration of the CPU 21A of the task cycle estimation device 20. As illustrated in Fig. 3, functionally, the CPU 21A includes a movement information acquisition section 40, an estimation section 41, and an output section 42.

The CPU 21A functions as each functional section illustrated in Fig. 3 by reading and executing the task cycle estimation program 25A that is stored in the storage section 25.

The movement information acquisition section 40 acquires movement information relating to the movements of the worker W when performing a predetermined series of tasks. Specifically, video images of the worker W performing a predetermined series of tasks are captured by the camera 30 and stored in the storage unit 25 as movement information. The movement information acquisition section 40 then acquires the movement information by reading the video images stored in the storage section 25. Note that instead of the camera 30, a motion sensor or the like may be used to acquire movement information of the worker W.

The estimation section 41 estimates a start point and an end point of the task cycle of the worker W based on the video images acquired by the movement information acquisition section 40. Here, the task cycle refers to a cycle of a series of tasks that the worker W repeatedly performs. Further, the start point of a task cycle refers to a point in time at which a series of tasks starts, and the end point of a task cycle refers to a point in time at which a series of tasks ends.

The estimation section 41 includes a posture sequence generating section 41A, a segment sequence generating section 41B, and a setting section 41C.

The posture sequence generating section 41A generates, based on the video images acquired by 40, a posture sequence relating to changes in posture based on a skeleton of the worker W, excluding information that is unique to the worker W. The posture sequence generating section 41A includes a motion vector sequence calculation section 43 and a clustering section 44.

The segment sequence generating section 41B generates, for each specific posture (key action), a segment sequence in which the posture sequence generated by the posture sequence generating section 41A is divided into plural segments so that each segment includes a specific posture once. The segment sequence generating section 41B includes a first segment sequence generating section 45, a frequent pattern identifying section 46, and a second segment sequence generating section 47.

Among the plural segment sequences generated by the segment sequence generating section 41B for each specific posture, the setting section 41C sets, as the start point and the end point of each task cycle, a beginning and an end of each segment included in a segment sequence having a highest degree of similarity between segments. The setting section 41C includes an evaluation value calculation section 48 and an identifying section 49.

The motion vector sequence calculation section 43 calculates a motion vector sequence of the worker W based on the video images acquired by the movement information acquisition section 40. A motion vector sequence is an example of a posture sequence, and is sequence data of motion feature values obtained by applying motion feature value extraction processing to a skeleton sequence.

Specifically, in order to avoid being affected by unique information such as the background or the clothing of the worker W, the motion vector sequence calculation section 43 estimates the posture of the worker W based on the video images, and converts the estimated posture into a skeleton sequence.

As a method of estimating the posture of the worker W and converting the estimated posture into a skeleton sequence, a known method called OpenPose, which is described in reference document 1 listed below, can be used. The skeleton sequence is time series data including coordinates of feature points such as body parts and joints of the worker W, and labels indicating the body parts of the feature points. For example, the feature points include facial parts such as the eyes and the nose of the worker W, and joints such as the neck, shoulders, elbows, wrists, hips, knees, and ankles of the worker W.

In OpenPose, a learned model is used, the learned model being a model that has learned a learning model, in which the input is the video images and the output is the skeleton sequence, and that uses a large number of video images as training data. As a learning method that acquires such a learned model, for example, a known method such as Convolutional Neural Networks (CNN) can be used.

(Reference Document 1) "OpenPose: Realtime Multi-Person 2D Pose Estimation using Part Affinity Fields", Zhe Cao, Student Member, IEEE, Gines Hidalgo, Student Member, IEEE, Tomas Simon, Shih-En Wei, and Yaser Sheikh, IEEE TRANSACTIONS ON PATTERN ANALYSIS AND MACHINE INTELLIGENCE.

Here, in work at a factory, since various workers with different body types carry out tasks, differences in body types have a significant effect. In order to avoid being affected by differences in body types, in the present exemplary embodiment, a technique called Motion Retargeting, which is described in reference document 2 listed below, is used to convert a skeleton sequence obtained from video images into a motion vector sequence representing motion feature values.

(Reference Document 2) K. Aberman, R. Wu, D. Lischinski, B. Chen, and D. Cohen-Or, "Learning character-agnostic motion learning for motion retargeting in 2d," TOG, vol. 38, no. 4, p. 75, 2019.

In Motion Retargeting, a skeleton sequence is input and an encoder is used to output feature vectors of three components, namely, motion, body type, and camera viewpoint, that is, motion feature values; however, in the present exemplary embodiment, as an example, in order to exclude the effect of body type and camera viewpoint, only the feature vector of the motion component is used.

Note that in order to exclude the effects of noise in posture estimation, at least one of three preprocessing processes, that is, time series interpolation processing, time series smoothing processing, and lower body interpolation processing, may be performed on the skeleton sequence before conversion to a motion vector sequence.

In the time series interpolation processing, if there is a joint point for which posture estimation has failed, the joint point in the previous frame is copied. In the time series smoothing processing, in order to remove noise from the posture estimation, smoothing processing is performed on the sequence data using a Gaussian filter. In the OpenPose used in the present exemplary embodiment, the posture of not only the upper body of a person but also the posture of the lower body of a person is estimated. That is, a sequence of postures based on the skeleton of the upper body and the lower body of the worker W is estimated. In the case of working at a factory, workers often work at a desk-top workbench, which means that the lower half of the body is often blocked by the desk, resulting in the loss of joint points in the lower half of the body. Since an encoder that extracts motion feature values, such as Motion Retargeting, takes the skeleton sequence of a person's entire body as input, in a case in which joint points of the lower body are missing, it may not be possible to properly output feature vectors of the motion component. Therefore, interpolation processing of the lower body may be performed. Specifically, as interpolation processing of the lower body, at least one of the joint points of both knees and both legs may be interpolated with a length that is proportional to the length of the person's torso.

The clustering section 44 performs clustering on the motion vector sequence calculated by the motion vector sequence calculation section 43 to generate a class sequence. Here, the class sequence is one-dimensional (cluster number) sequence data that is the result of applying clustering to the motion vector sequence.

Specifically, the clustering section 44 converts a high-dimensional motion vector sequence into a one-dimensional class sequence. In the present exemplary embodiment, as an example, spectral clustering is applied to convert the high-dimensional motion vector sequence calculated by the motion vector sequence calculation section 43 into a one-dimensional class sequence. Spectral clustering is an unsupervised clustering method that classifies similar motions into the same class by performing clustering on a motion vector sequence, making it easier to capture cyclicality.

In work at a factory, scenes other than the product assembly to be analyzed may occur at the start and at the end of tasks. Specifically, this includes the waiting time before assembly and the waiting time after the completion of the task. Since these scenes become noise when estimating the start point and the end point of a task cycle, these scenes may be removed by preprocessing. For example, as preprocessing, a process is performed to remove, from the class sequence, classes that are only near the beginning or the end of the class sequence and that have a ratio to the length of the class sequence which is less than or equal to a predetermined first threshold value. The first threshold value can be set to a length that is, for example, 0.05 times a data length of the class sequence. Note that the data length of a class sequence is the number of classes included in the class sequence. For example, in a case in which the data length of the class sequence is 100, a range of five items from the beginning is near the beginning, and a range of five items from the end is near the end.

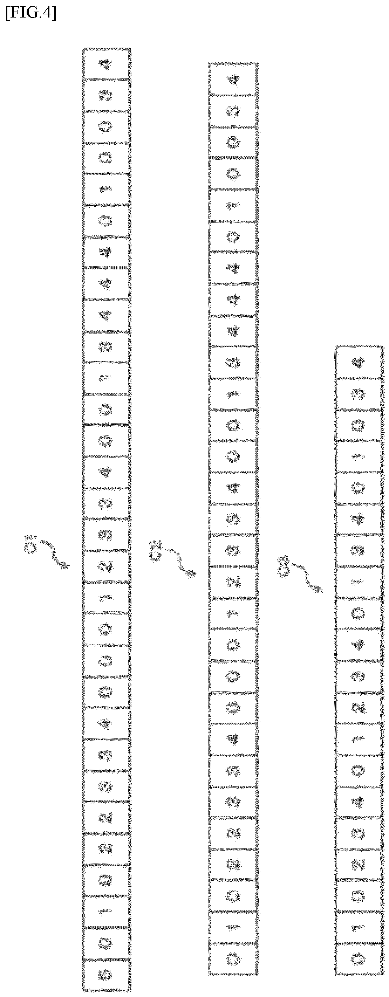

Fig. 4 illustrates an example of a class sequence. The class sequence C1 illustrated in Fig. 4 is a class sequence obtained by clustering a motion vector sequence in a case in which the worker W performs a series of tasks plural times, and the motions of the worker W are clustered into six classes, that is, classes 0 to 5.

Here, class 5 is a class that is only at the beginning, and since the ratio of class 5 to the length of the class sequence is less than or equal to 0.05, the motion of class 5 is determined to be noise, and the data of class 5 is removed from the class sequence C1 to obtain a class sequence C2.

Further, in a case in which a beginner works, although the working time for each task cycle may differ, in order to identify a task cycle, it is important to focus only on the order in which the tasks occurs, and therefore, it is necessary to carry out processing so as not to be affected by the working time for each task cycle. Therefore, a labeling process is performed on the one-dimensional class sequence C2, from which noise has been removed in the preprocessing, to condense consecutive data of the same class.

In the example shown in Fig. 4, the class sequence C2 is 0, 1, 0, 2, 2, 3, 3, 4, ..., and the values of class 2 and class 3 are consecutive. In this manner, consecutive values are condensed into one to generate a condensed class sequence C3 such as 0, 1, 0, 2, 3, 4, ... However, in a case of estimating the start point and the end point of a task cycle, since it is necessary to estimate the start point and the end point of each task cycle in the video images, the class sequence C2 before being condensed is held in the storage section 25.

In work at a factory, there are often unique motions, such as product assembly, that occur only once per cycle. For example, the motion of picking up a particular part and the motion of returning a finished product to a storage box occur only once per cycle. In the present exemplary embodiment, a motion that occurs only once per cycle is defined as a key action, and a first segment sequence is generated from the class sequence C3 with attention focused on the key action.

The first segment sequence generating section 45 generates, for each of the plural classes, a first segment sequence in which the class sequence C2 is divided into plural first segments, beginning with a class selected as the key action from among the plural classes clustered by the clustering section 44. That is, each of the plural classes is sequentially selected as the key action, and a first segment sequence is generated for each of the plural classes. Here, the first segment sequence is class sequence data in which a class sequence condensed in a time series direction by the labeling processing is divided by the key action.

In the example of Fig. 4, since the class sequence C3 includes five classes from class 0 to class 4, each of the five classes is sequentially selected as the key action to generate the first segment sequence.

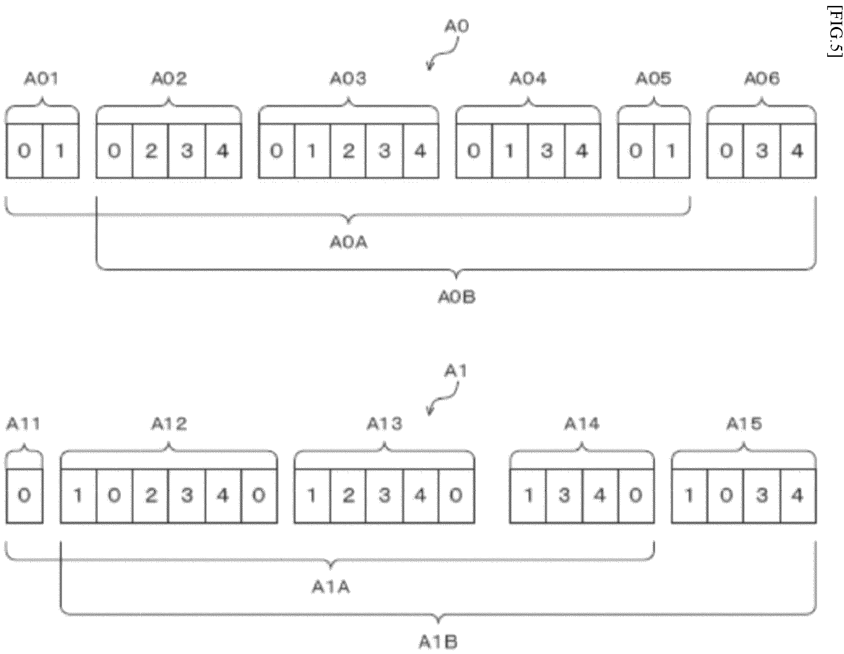

Specifically, first, class 0 is selected as the key action, and the class sequence C3 is divided with class 0 as the beginning. As a result, as illustrated in Fig. 5, the class sequence C3 is divided into six first segments, A01 to A06, that is, "0, 1", "0, 2, 3, 4", "0, 1, 2, 3, 4", "0, 1, 3, 4", "0, 1", and "0, 3, 4", and a first segment sequence A0 consisting of these six first segments A01 to A06 is generated.

Next, class 1 is selected as the key action, and the class sequence C3 is divided with class 1 at the beginning. As a result, the class sequence C3 is divided into five first segments, A11 to A15, that is, "0", "1, 0, 2, 3, 4, 0", "1, 2, 3, 4, 0", "1, 3, 4, 0", and "1, 0, 3, 4", and a first segment sequence A1 consisting of these five first segments A11 to A15 is generated.

Similarly, first segment sequences A2 to A4 are generated for classes 2 to 4, respectively.

The frequent pattern identifying section 46 identifies a frequent pattern of a class common among the plural first segments for each of the plural first segment sequences A0 to A4 generated by the first segment sequence generating section 45.

For identifying frequent patterns, for example, a technique called Prefix Span, which is a sequential pattern mining technique, and which is described in reference document 3 listed below, can be used.

(Reference Document 3) J. Han, J. Pei, B. Mortazavi-Asl, H. Pinto, Q. Chen, U. Dayal, and M. Hsu, "Prefixspan: Mining sequential patterns efficiently by prefix-projected pattern growth," ICDEIEEE, pp. 215-224 2001.

The frequent pattern identifying section 46 uses PrefixSpan to estimate a frequent pattern common among the plural first segments. Specifically, the pattern that has the highest number of appearances among the frequent pattern candidates is determined as the final frequent pattern.

Here, the frequent pattern identifying section 46 may apply sequential pattern mining using PrefixSpan to each of the first segment sequence excluding the last first segment and the first segment sequence excluding the beginning first segment, rather than applying PrefixSpan to all of the plural first segments that configure the first segment sequences.

This is to prevent, when a key action appears near the middle of each task cycle, a pattern that appears before the key action or a pattern that appears after the key action from being estimated as the frequent pattern.

There are three possible positions at which a key action may appear: at the beginning, at the end, or at a position other than the beginning or the end of a task cycle. In a case in which a key action appears at the beginning or at the end, frequent patterns that cover each task cycle can be easily extracted by applying sequential pattern mining to the first segment obtained by dividing the class sequence at the position of the key action.

However, when sequential pattern mining is applied to a first segment sequence obtained by dividing a class sequence at the position of a key action that appears other than at the beginning or at the end, only frequent patterns before the key action or frequent patterns after the key action are extracted. Therefore, frequent patterns before the key action may be extracted from the first segment sequence excluding the first segment at the end of the first segment sequence, and frequent patterns after the key action may be extracted from the segments excluding the beginning, and these frequent patterns may be combined.

That is, the first segment sequence generating section 45 generates an end-excluding segment sequence from which the end first segment is excluded and a front-excluding segment sequence from which the front first segment is excluded, and the frequent pattern identifying section 46 may identify a frequent pattern that combines the frequent pattern of the end-excluding segment sequence and the frequent pattern of the front-excluding segment sequence as a frequent pattern of a class common among the plural first segments.

This makes it possible to extract frequent patterns with high accuracy even in a case in which a key action appears at a position other than at the beginning or at the end of the task cycle.

In the example of Fig. 5, since the first segment sequence A0 in class 0 is configured by six first segments, A01 to A06, "0" is identified as the frequent pattern of the end-excluding segment sequence A0A which consists of the first segments A01 to A05 and from which the end first segment A06 is excluded. Further, "0" is identified as the frequent pattern of the front-excluding segment sequence A0B which consists of the first segments A02 to A06 and from which the front first segment A01 is excluded. In this case, since the frequent pattern of the end-excluding segment sequence A0A and the frequent pattern of the front-excluding segment sequence A0B are the same, "0" is identified as the frequent pattern of the first segment sequence A0.

Similarly, "0" is identified as the frequent pattern of the end-excluding segment sequence A1A, which consists of the first segments A11 to A14 and excludes the end first segment A15 from the first segment sequence A1, in class 1. Further, "3, 4" is identified as the frequent pattern of the front-excluding segment sequence A1B which consists of the first segments A12 to A15 and from which the front first segment A11 is excluded. In this case, since the frequent pattern of the end-excluding segment sequence A1A and the frequent pattern of the front-excluding segment sequence A1B are different, "0, 3, 4", which is a combination of "0" and "3, 4", is identified as the frequent pattern of the first segment sequence A1.

Hereinafter, frequent patterns are identified for each of the first segment sequences in classes 2 to 4.

The second segment sequence generating section 47 generates a second segment sequence in which the class sequence is divided into plural second segments including frequent patterns. Specifically, the second segment sequence generating section 47 generates a second segment sequence in which a class sequence is divided into a second segment in which a pattern other than a second segment candidate including a frequent pattern is added to the beginning of the second segment candidate that is adjacent to the rear of the pattern, and a second segment sequence in which a class sequence is divided into a second segment in which a pattern other than the second segment candidate is added to the end of the second segment candidate that is adjacent to the front of the pattern.

More specifically, first, a set of classes including frequent patterns is searched for in order from the beginning of the class sequence C3. A set of classes in which the ratio of the number of classes configuring the frequent pattern to the number of classes configuring the set of classes including the frequent pattern is greater than or equal to a predetermined threshold value is set as a second segment candidate. Note that, as an example, the threshold value can be set as 0.2; however, there is no limitation thereto.

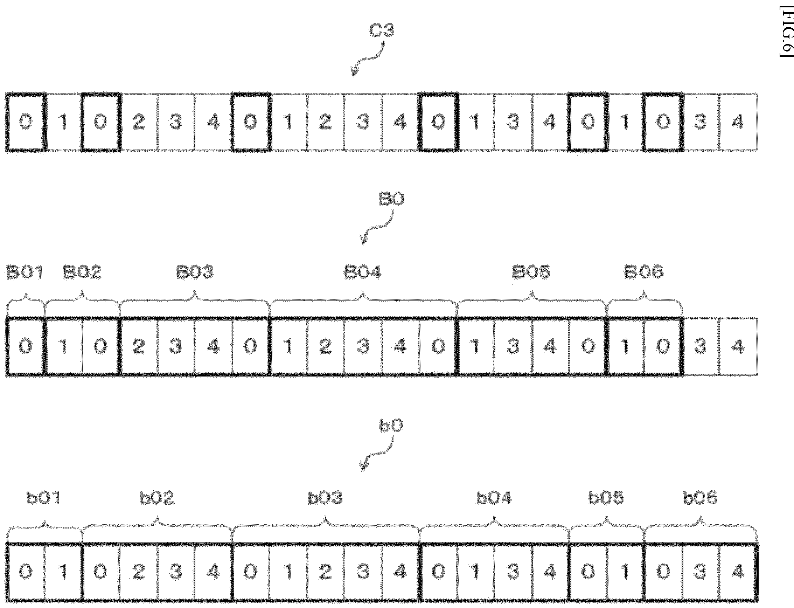

As described above, the frequent pattern in the first segment sequence A0 is "0". Therefore, as illustrated in Fig. 6, five frequent patterns "0" indicated by bold frames are searched for from the beginning of the class sequence C3. The frequent pattern "0" at the beginning becomes a second segment B01.

Next, a pattern obtained by adding a pattern other than the frequent pattern "0" to the adjacent frequent pattern "0" is set as a second segment. In Fig. 6, the pattern between the first frequent pattern "0" and the second frequent pattern "0" is "1". Therefore, the pattern "1, 0", which is obtained by adding the pattern "1" to the second frequent pattern "0" adjacent to the rear, becomes a second segment B02. Further, the pattern between the second frequent pattern "0" and the third frequent pattern "0" is "2, 3, 4". Therefore, the pattern "2, 3, 4, 0", which is obtained by adding the pattern "2, 3, 4" to the third frequent pattern "0" adjacent to the rear, becomes a second segment B03. Similarly, second segments B04 to B06 are generated, and a second segment sequence B0 including the second segments B01 to B06 is generated. Note that the "3, 4" at the end is a remaining pattern that did not become a second segment.

Next, a second segment sequence of a different pattern is generated. Specifically, the pattern "1" between the first frequent pattern "0" and the second frequent pattern "0" is added to the first frequent pattern "0" adjacent to the front, to form a pattern "0, 1" that is set as a second segment b01. Further, the pattern "2, 3, 4" between the second frequent pattern "0" and the third frequent pattern "0" is added to the second frequent pattern "0" adjacent to the front to form a pattern "0, 2, 3, 4" that is set as a second segment b02. Similarly, second segments b03 to b06 are generated, and a second segment sequence b0 is generated.

In this manner, two patterns, that is, second segment sequences B0 and b0, are generated for the first segment sequence A0 in class 0.

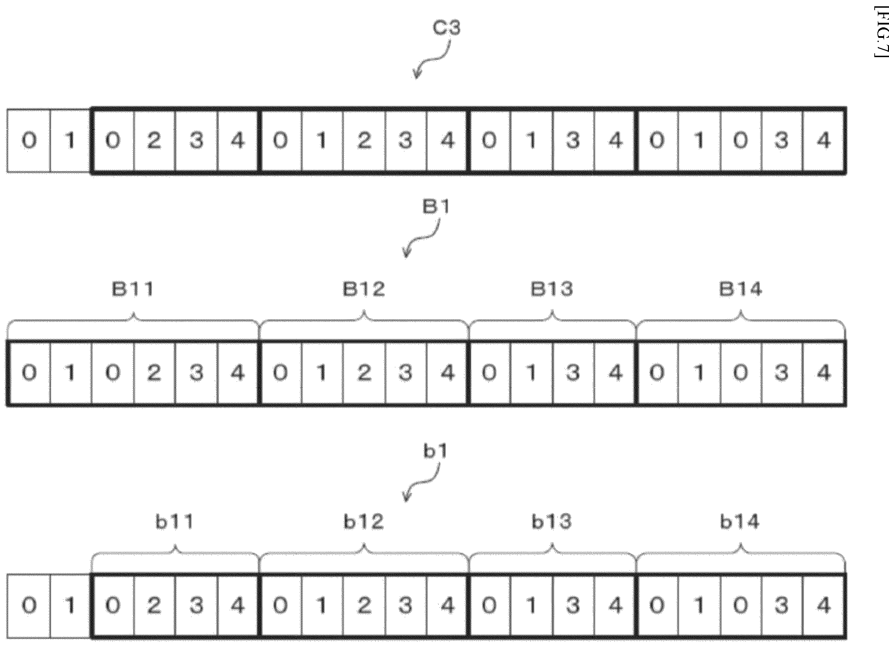

Further, as described above, the frequent pattern in the first segment sequence A1 is "0, 3, 4". Therefore, as illustrated in Fig. 7, four patterns, including the frequent pattern "0, 3, 4", indicated by bold frames are searched for from the beginning of the class sequence C3.

Next, there is no pattern between the first pattern "0, 2, 3, 4" and the second pattern "0, 1, 2, 3, 4". Further, in the example of Fig. 7, since the pattern "0, 1" at the beginning does not include a frequent pattern, it is added to the pattern "0, 2, 3, 4" at the rear thereof to make "0, 1, 0, 2, 3, 4" into a second segment B11. Similarly, second segments B12 to B14 are generated, and a second segment sequence B1 is generated.

Next, a second segment sequence of a different pattern is generated. Specifically, since there is no pattern including a frequent pattern before the pattern "0, 1" at the beginning, and it cannot be added to the preceding pattern, the pattern "0, 2, 3, 4" becomes the first second segment b11. Similarly, second segments b12 to b14 are generated, and a second segment sequence b1 is generated. Note that the "0, 1" at the beginning is a remaining pattern that did not become a second segment.

In this manner, two patterns, that is, second segment sequences B1 and b1, are generated for the first segment sequence A1 in class 1.

In the same manner, two patterns, second segment sequences B2 and b2, are generated for the first segment sequence A2 in class 2, two patterns, second segment sequences B3 and b3, are generated for the first segment sequence A3 in class 3, and two patterns, second segment sequences B4 and b4, are generated for the first segment sequence A4 in class 4. As a result, 10 second segment sequences are generated.

Note that two post-processing processes may be performed on the generated second segment sequences in order to remove noise. The first post-processing is noise removal focusing on the lengths of the plural second segments included in the second segment sequences. Here, the length of the second segment is the number of classes that configure the second segment, and is referred to hereinafter as the cycle length. The first post-processing is processing in which a second threshold value is set to half the cycle length of the plural second segments included in the second segment sequence, and a second segment having a cycle length less than or equal to the second threshold value is joined to the previous second segment.

The second post-processing is noise removal focusing on a degree of similarity between the plural second segments included in the second segment sequences. For all combinations of the plural second segments, dynamic time warping (DTW) is calculated as the degree of similarity using the Hamming distance as a distance function, and second segments whose calculated degrees of similarity are all less than or equal to a predetermined third threshold value are deleted. Note that the threshold value is set to half the median (middle value) of the degrees of similarity.

The evaluation value calculation section 48 calculates an evaluation value relating to the degree of similarity between the plural second segments for each of the plural second segment sequences generated by the second segment sequence generating section 47.

As an example, the evaluation value calculation section 48 calculates an evaluation value S using Formula (1) below.

$$S = S_S w_S + S_c w_c + S_l w_l \qquad \ldots (1)$$

Here, $S_s$ is calculated using the following Formula (2).

$$S_s = \frac{1}{{}_N C_2} \Sigma_{n_1}^{N} \Sigma_{n_2}^{N} (1 - \delta_{n_1 n_2}) dtw(R_{n_1}, R_{n_2}) \qquad \ldots (2)$$

Here, C represents a combination. Further, N is the number of second segments included in the second segment sequence. In addition, $n_1$ and $n_2$ are indexes indicating the respective second segments. $\delta_{n_1 n_2}$ is a Kronecker delta for $n_1$ and $n_2$. Furthermore, $R_{n_1}$ and $R_{n_2}$ represent two second segments for which the degree of similarity is calculated. $dtw(R_{n_1}, R_{n_2})$ is the DTW with the aforementioned Hamming distance as the distance function, and is a function to calculate the degree of similarity between $R_{n_1}$ and $R_{n_2}$.

For example, in a case in which three second segments are included in the second segment sequence, the degree of similarity between the first second segment and the second second segment, the degree of similarity between the second second segment and the third second segment, and the degree of similarity between the first second segment and the third second segment are respectively calculated, and the average value of the respectively calculated degrees of similarity is the evaluation value $S_s$.

Here, $S_c$ is calculated using the following Formula (3). Note that, as described above, the beginning or the end of the second segment sequence may contain remaining patterns that do not become a second segment. Therefore, the ratio of the classes configuring the remaining patterns to all of the classes included in the second segment sequence is calculated as an evaluation value $S_c$ using the following Formula (3).

$$S_c = \frac{|\overline{A}|}{|L|} \qquad \ldots (3)$$

Here, A represents a set of classes that configure all of the second segments included in the second segment sequence. Further, $\overline{A}$ represents the set of classes that configure the remaining patterns. L is a set of classes that configure the second segment sequence.

Further, $S_1$ is calculated using the following Formula (4).

$$S_l = \sqrt[10]{\frac{1}{N} \Sigma_n^N l_n} \qquad \ldots (4)$$

Here, ln is the cycle length of the nth cycle, that is, the length of the nth second segment sequence.

In addition, $w_s$, $w_c$, and $w_l$ in the above Formula (1) are weights with respect to $S_s$, $S_c$, and $S_l$, respectively, and in the present exemplary embodiment, all of the weights are set to 1.

The identifying section 49 identifies, as the start point and the end point of each task cycle, the beginning and the end of each of the second segments included in the second segment sequence having a highest evaluation value among the evaluation values calculated for each of the plural second segment sequences.

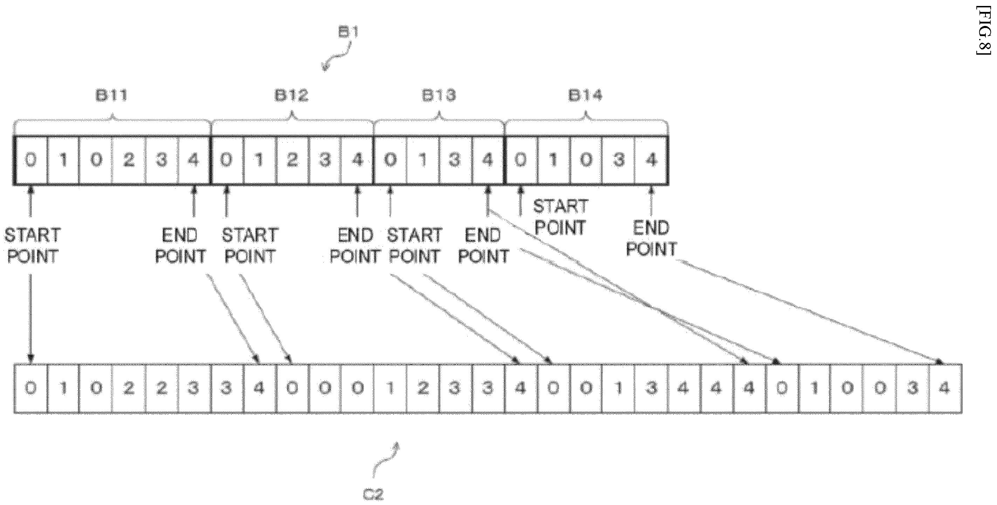

For example, it is assumed that, among the evaluation values calculated for the ten generated second segment sequences, for example, the evaluation value of the second segment sequence B1 is the highest. In this case, as illustrated in Fig. 8, class 0 of the class sequence C2, which corresponds to class 0 at the beginning of the second segment B11, is identified as the start point. Further, class 4 of the class sequence C2, which corresponds to class 4 at the end of the second segment B11, is identified as the end point. Similarly, the classes of the class sequence C2, corresponding to the beginning class and the end class of the second segments B12 to B14, are identified as the start point and the end point, respectively.

The output section 42 outputs the start point and the end point of the task cycle estimated by the estimation section 41, that is, the start point and the end point of the task cycle of the class sequence C2, which are identified by the identifying section 49, to the storage section 25 for storage.

Next, task cycle estimation processing executed by the CPU 21A of the task cycle estimation device 20 is described with reference to the flowchart illustrated in Fig. 6.

At step S100, the CPU 21A acquires, by reading from the storage section 25, video images, which are captured by the camera 30, of the worker W performing a predetermined series of tasks.

At step S101, the CPU 21A calculates a motion vector sequence of the worker W based on the video images acquired at step S100.

At step S102, the CPU 21A performs clustering on the motion vector sequence calculated at step S101 to generate a class sequence.

At step S103, the CPU 21A generates, for each of the plural classes, a first segment sequence in which the class sequence is divided into plural first sequences, beginning with a class selected as the key action from among the plural classes clustered at step S102.

At step S104, the CPU 21A identifies a frequent pattern of a class common among the plural first segments for each of the plural first segment sequences generated at step S103.

At step S105, the CPU 21A generates a second segment sequence in which the class sequence is divided into plural second segments including frequent patterns identified at step S104.

At step S106, the CPU 21A calculates an evaluation value relating to the degree of similarity between the plural second segments for each of the plural second segment sequences generated at step S105.

At step S107, the CPU 21A identifies, as the start point and the end point of each task cycle, the beginning and the end of each of the second segments included in the second segment sequence having the highest evaluation value among the evaluation values calculated for each of the plural second segment sequences at step S106.

At step S108, the CPU 21A outputs the start point and the end point of the task cycle of the class sequence, which are identified at step S107, to the storage section 25 for storage.

In this manner, in the present exemplary embodiment, since the start point and the end point of a task cycle of the worker W are estimated based on movement information relating to the movements of the worker W when performing a predetermined series of tasks, the start point and the end point of a task cycle can be estimated without measuring standard working times and the like in advance.

Note that the above-described exemplary embodiments are merely illustrative examples of the configuration of the present disclosure. The present disclosure is not limited to the above-described specific embodiments, and various modifications can be made within the scope of the technical idea thereof.

Further, the task cycle estimation processing executed by the CPU reading and executing software (a program) in each of above-described exemplary embodiments may be executed by various types of processor other than a CPU. Examples of such processors include a Programmable Logic Device (PLD) in which the circuit configuration can be modified post-manufacture, such as a Field-Programmable Gate Array (FPGA), or a specialized electric circuit that is a processor with a specifically-designed circuit configuration for executing recognition processing, such as an Application Specific Integrated Circuit (ASIC). Further, the task cycle estimation processing may be executed by one of these various types of processors, or may be executed by combining two or more of the same type or different types of processors (for example, plural FPGAs, or a combination of a CPU and an FPGA, or the like). Moreover, a hardware configuration of the various processors is specifically formed as an electric circuit combining circuit elements such as semiconductor elements.

Note that the disclosure of Japanese Patent Application No. 2022-116724 is incorporated herein by reference in its entirety. In addition, all documents, patent applications, and technical standards mentioned herein are incorporated by reference to the same extent as if each individual document, patent application, and technical standard were specifically and individually indicated to be incorporated by reference.

**Claims**

1. task cycle estimation device, comprising:

    a movement information acquisition section that acquires movement information relating to a movement of a worker when performing a predetermined series of tasks;
    an estimation section that estimates a start point and an end point of a task cycle of the worker based on the movement information; and
    an output section that outputs the estimated start point and end point of the task cycle.

2. The task cycle estimation device according to claim 1, wherein the estimation section comprises:

a posture sequence generating section that, based on the movement information, generates a posture sequence relating to a change in posture based on a skeleton of the worker, the posture sequence excluding information that is unique to the worker;

a segment sequence generating section that generates, for each specific posture, a segment sequence in which the posture sequence is divided into a plurality of segments so that each segment includes a specific posture once; and

a setting section that sets, as the start point and the end point of each task cycle, a beginning and an end of each segment included in a segment sequence having a highest degree of similarity between segments, among the plurality of segment sequences generated for each specific posture.

3. The task cycle estimation device according to claim 2, wherein:

the posture sequence generating section comprises:

a motion vector sequence calculation section that calculates a motion vector sequence of the worker based on the movement information; and
a clustering section that performs clustering on the motion vector sequence to generate a class sequence,

the segment sequence generating section comprises:

a first segment sequence generating section that generates, for each of a plurality of classes, a first segment sequence in which the class sequence, which begins with a class selected from the plurality of classes, is divided into a plurality of first segments; and
a frequent pattern identifying section that identifies a frequent pattern of a class common among the plurality of first segments, for each of the generated plurality of first segment sequences; and
a second segment sequence generating section that generates a second segment sequence in which the class sequence is divided into a plurality of second segments including the frequent pattern, and

the setting section comprises:

an evaluation value calculation section that calculates an evaluation value relating to a degree of similarity between the plurality of second segments for each of the generated plurality of second segment sequences; and
an identifying section that identifies, as the start point and the end point of each task cycle, a beginning and an end of each second segment included in a second segment sequence having a highest evaluation value among evaluation values calculated for each of the plurality of second segment sequences.

4. The task cycle estimation device according to claim 3, wherein:
the clustering section removes, from the class sequence, classes that exist only near a beginning or an end of the class sequence and that have a ratio, with respect to a length of the class sequence, which is less than or equal to a predetermined first threshold value.

5. The task cycle estimation device according to claim 3, wherein:
the second segment sequence generating section sets a second threshold value to half a cycle length of the plurality of second segments included in the second segment sequence, and joins a second segment having a cycle length that is less than or equal to the second threshold value to an immediately previous second segment.

6. The task cycle estimation device according to claim 3, wherein:
the evaluation value calculation section excludes, from calculation of the evaluation value, second segments for which degrees of similarity between the plurality of second segments are all less than or equal to a predetermined third threshold value.

7. The task cycle estimation device according to claim 3, wherein:

the first segment sequence generating section generates an end-excluding segment sequence from which an end first segment is excluded, and a front-excluding segment sequence from which a front first segment is excluded; and
the frequent pattern identifying section identifies a frequent pattern that combines a frequent pattern of the end-excluding segment sequence and a frequent pattern of the front-excluding segment sequence as a frequent pattern of a class common among the plurality of first segments.

8. The task cycle estimation device according to claim 3, wherein the second segment sequence generating section generates a second segment sequence in which the class sequence is divided into a second segment in which a pattern other than a second segment candidate including the frequent pattern is added to a beginning of the second segment candidate that is adjacent to a rear of the pattern, and a second segment sequence in which the class sequence is divided into a second segment in which a pattern other than the second segment candidate is added to an end of the second segment candidate that is adjacent to a front of the pattern.

9. The task cycle estimation device according to claim 2, wherein the posture sequence is a sequence of postures based on the skeleton of an upper body and a lower body of the worker.

10. The task cycle estimation device according to claim 2, wherein the posture sequence generating section generates a posture sequence excluding an effect of camera viewpoint.

11. The task cycle estimation device according to any one of claims 2 to 10, wherein the posture sequence generating section generates a skeleton sequence of the worker based on the movement information, and generates the posture sequence after performing at least one of interpolating processing or smoothing processing with respect to the generated skeleton sequence.

12. A task cycle estimation method in which a computer executes processing, the processing comprising:

acquiring movement information relating to a movement of a worker when performing a predetermined series of tasks;
estimating a start point and an end point of a task cycle of the worker based on the movement information; and
outputting the estimated start point and end point of the task cycle.

13. A task cycle estimation program that causes a computer to execute processing, the processing comprising:

acquiring movement information relating to a movement of a worker when performing a predetermined series of tasks;
estimating a start point and an end point of a task cycle of the worker based on the movement information; and
outputting the estimated start point and end point of the task cycle.

[FIG.1]

[FIG.2]

[FIG.3]

[FIG.4]

[FIG.5]

[FIG.6]

[FIG.7]

[FIG.8]

[FIG.9]

```
                        ┌─────────┐
                        │  START  │
                        └─────────┘
                             │
          ┌──────────────────────────────────┐
          │      ACQUIRE VIDEO IMAGES         │  S100
          │        CAPTURING TASKS           │
          └──────────────────────────────────┘
                             │
          ┌──────────────────────────────────┐
          │       CALCULATE MOTION           │  S101
          │       VECTOR SEQUENCE            │
          └──────────────────────────────────┘
                             │
          ┌──────────────────────────────────┐
          │          CLUSTERING              │  S102
          └──────────────────────────────────┘
                             │
          ┌──────────────────────────────────┐
          │        GENERATE FIRST            │  S103
          │       SEGMENT SEQUENCE           │
          └──────────────────────────────────┘
                             │
          ┌──────────────────────────────────┐
          │    IDENTIFY FREQUENT PATTERN     │  S104
          └──────────────────────────────────┘
                             │
          ┌──────────────────────────────────┐
          │       GENERATE SECOND            │  S105
          │       SEGMENT SEQUENCE           │
          └──────────────────────────────────┘
                             │
          ┌──────────────────────────────────┐
          │    CALCULATE EVALUATION VALUE    │  S106
          └──────────────────────────────────┘
                             │
          ┌──────────────────────────────────┐
          │    IDENTIFY START POINT AND      │  S107
          │    END POINT OF TASK CYCLE       │
          └──────────────────────────────────┘
                             │
          ┌──────────────────────────────────┐
          │     OUTPUT START POINT AND       │  S108
          │     END POINT OF TASK CYCLE      │
          └──────────────────────────────────┘
                             │
                        ┌─────────┐
                        │   END   │
                        └─────────┘
```

## INTERNATIONAL SEARCH REPORT

| International application No. |
|---|
| **PCT/JP2023/023861** |

**A. CLASSIFICATION OF SUBJECT MATTER**

*G06T 7/20*(2017.01)i; *G06Q 50/04*(2012.01)i; *G06V 40/20*(2022.01)i
FI:    G06T7/20 300Z; G06Q50/04; G06V40/20

According to International Patent Classification (IPC) or to both national classification and IPC

**B. FIELDS SEARCHED**

Minimum documentation searched (classification system followed by classification symbols)

G06T7/20; G06Q50/04; G06V40/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-46210 A (TOSHIBA CORP.) 23 March 2022 (2022-03-23) paragraphs [0080]-[0081], [0084]-[0086] | 1, 12-13 |
| A | | 2-11 |
| X | JP 2008-77424 A (TOSHIBA CORP.) 03 April 2008 (2008-04-03) paragraphs [0011]-[0013], [0022] | 1, 12-13 |
| A | | 2-11 |
| A | JP 2020-144660 A (CANON INC.) 10 September 2020 (2020-09-10) entire text | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2023** | **19 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2023/023861**

| Patent document cited in search report | | | Publication date (day/month/year) | Patent family member(s) | Publication date (day/month/year) |
|---|---|---|---|---|---|
| JP | 2022-46210 | A | 23 March 2022 | (Family: none) | |
| JP | 2008-77424 | A | 03 April 2008 | (Family: none) | |
| JP | 2020-144660 | A | 10 September 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022003491 A

- JP 2022116724 A

**Non-patent literature cited in the description**

- OpenPose: Realtime Multi-Person 2D Pose Estimation using Part Affinity Fields. **ZHE CAO** ; **GINES HIDALGO** ; **TOMAS SIMON** ; **SHIH-EN WEI** ; **YASER SHEIKH**. IEEE TRANSACTIONS ON PATTERN ANALYSIS AND MACHINE INTELLIGENCE. IEEE

- **K. ABERMAN** ; **R. WU** ; **D. LISCHINSKI** ; **B. CHEN** ; **D. COHEN-OR**. Learning character-agnostic motion learning for motion retargeting in 2d. *TOG*, 2019, vol. 38 (4), 75
- **J. HAN** ; **J. PEI** ; **B. MORTAZAVI-ASL** ; **H. PINTO** ; **Q. CHEN** ; **U. DAYAL** ; **M. HSU**. Prefixspan: Mining sequential patterns efficiently by prefix-projected pattern growth. *ICDEIEEE*, 2001, 215-224